# EUROPEAN PATENT APPLICATION

(11) **EP 3 366 937 A1**
(43) Date of publication of application: **29.08.2018**
(21) Application number: 17158495.6
(22) Date of filing: 28.02.2017
(51) Int. Cl.: F16C 41/00, F16H 13/08, H02K 5/173, F16C 19/06, F16C 19/18, F16C 27/06

(54) **REDUCTION BEARING AND ELECTRIC MOTOR**

(71) Applicant: Shenzhen Volmen Precision Mechanical Technology Co., Ltd, Shenzhen Guangdong 518101 (CN)
(72) Inventor: VOLAK, Miroslav, SK-04023 Kosice (SK); BARNA, Jozef, SK-08001 Presov (SK)
(74) Representative: Seemann & Partner Patentanwälte mbB

(57) **Abstract**

The invention relates to a reduction bearing (31) in a ringshaped configuration having a central axis of rotational symmetry (50) and having three rings (1, 2, 3) including an inner ring (3), a center ring (2) and an outer ring (1), the three rings (1, 2, 3) being concentric around the axis of rotational symmetry (50), as well as an electric motor. The inventive reduction bearing (31) further includes a first ring of rolling elements (4a) and a second ring of rolling elements (4b), the two rings of rolling elements (4a, 4b) being centered around the axis of rotational symmetry (50) and located between the inner ring (3) and the outer ring (1), wherein the inner ring (3) and the outer ring (1) are configured as having bearing races (8a, 8b) for both of the two rings of rolling elements (4a, 4b) in a radial direction, wherein the reduction bearing (31) is configured to transmit a wavetype reduction action between the center ring (2) and either the inner ring (3) or the outer ring (1) via axial displacement of the rolling elements (4a, 4b) of at least one of the two rings of rolling elements (4a, 4b).

## Description

The invention relates to a reduction bearing in a ring-shaped configuration having a central axis of rotational symmetry and having three rings including an inner ring, a center ring and an outer ring, the three rings being concentric around the axis of rotational symmetry, as well as an electric motor.

Radial bearings with concentric rings interposed with concentric rings of rolling elements are commonly used to take up radial forces while allowing rotational movement of rotating parts connected with the inner ring of the bearing around a common central axis of the concentric rings. Furthermore, gearboxes for rotational movements are known which are used to reduce a rotating speed of a rotating element being applied to an input of the gearbox into a slower rotation at an output of the gearbox. Within the present application, this is called a reduction action or reducing action.

Commonly known gearboxes themselves are not capable of or illsuited to bearing radial forces and are therefore usually used in combination with external or additional radial bearings. Many technical applications require reducing action but are faced with the problem that commonly known gearboxes in combination with bearings are prohibitively large. One such field of technology is robotics, which has a particularly strong need for miniaturization combined with robust and precise rotary speed reduction. Another field of technology, in which the invention can be used, is automotive, especially electric cars and electric wheels.

European patent application EP 15 182 419.0 by the present applicant discloses a reduction bearing integrating the reduction action with radial bearing functionality into a single unit. The reduction bearing has at least three concentric rings configured as bearing races for two concentric rings of rolling elements such that the three concentric rings are freely rotatable against each other while bearing radial forces. This is combined with the integration of a harmonic wave-type reduction stage into extensions of the at least three concentric rings, which is based on the known harmonic wave-type reduction principle. The harmonic wave-type action is made possible by radial displacement of rolling elements between specially structured inner and outer surfaces of the outer and inner rings, respectively.

The disclosure of EP 15 182 419.0 is hereby incorporated by reference in full.

It is an object of the present invention to enhance the bearing capabilities of known reduction bearings and to reduce the overall size of such reduction bearings.

This object if achieved by a reduction bearing in a ring-shaped configuration having a central axis of rotational symmetry and having three rings including an inner ring, a center ring and an outer ring, the three rings being concentric around the axis of rotational symmetry, a first ring of rolling elements and a second ring of rolling elements, the two rings of rolling elements being centered around the axis of rotational symmetry, in particular in axial alignment with each other, and located between the inner ring and the outer ring, wherein the inner ring and the outer ring are configured as having bearing races for both of the two rings of rolling elements in a radial direction, wherein the reduction bearing is configured to transmit a wave-type reduction action between the center ring and either the inner ring or the outer ring via axial displacement of the rolling elements of at least one of the two rings of rolling elements.

The present invention is based on the idea of using axial displacement instead of radial displacement inside the reduction bearing using two rings of rolling elements. At least one ring of rolling elements is used for axial displacement, that is, for translating the reduction action. Since both rings of rolling elements are kept between the inner ring and the outer ring, with the adjacent surfaces of the inner ring and the outer ring, configured as bearing races, the reduction bearing keeps its full radial bearing capacity. By providing an axial displacement action instead of a radial displacement action, the reduction bearing is in addition now capable of acting as an axial bearing, too.

The provision of an axial displacement action in the harmonic-wave type reduction action also renders it possible to build such reduction bearings in a radially smaller space, that is, with a smaller diameter than previously known reduction bearings. Furthermore, the provision of two rings of rolling elements makes it possible to configure the two rings of rolling elements either as cooperating, that is, the rolling elements of both rings of rolling elements take part in the axial displacement, or to decouple the two rings by providing that one ring of rolling elements takes part in the axial displacement action, whereas the second ring of rolling elements acts as a more traditional axial and radial bearing without axial or radial displacement of the rolling elements thereof.

Advantageously, the two rings of rolling elements are in axial alignment with each other. The term axial alignment means, that the two rings are concentric and have the same diameter, which means that the mechanical make-up of the inner ring and the outer ring may be held especially simple.

Preferably, both rings of rolling elements have the same number of rolling elements, and the rolling elements of both rings are in axial alignment with each other. This preferred configuration makes it possible to have pairs of adjacent rolling elements of the two rings move axially in unison, that is, together. The use of both rings of rolling elements for axial displacement provides for a low-friction reduction action.

In this context, the axially aligned rolling elements of the two rings of rolling elements are advantageously in direct contact with each other, or separated by an elastic, in particular low-friction, axial separating element of flat or biconcave cross section, and the rolling elements of both rings of rolling elements are subject to axial displacement. The provision of an axial separating element provides for a further reduction in the friction between the adjacent rolling elements of the two rings of rolling elements and has the further benefit of eliminating any play for the rolling elements of the two rings of rolling elements, especially if the axial separating element is elastic., In this case, the axial separating elements take part in the axial bearing action of the reduction bearing. Low friction may be achieved by either coating the axial separating element with the low-friction coating, such as Teflon^{®} or other suitable well-known materials, or by using a low-friction compound as the axial separating element.

Preferably, the axial separating element is a ring common to all the rolling elements of the two rings of rolling elements. Alternatively, every pair of axially aligned rolling elements is provided with its own axial separating element. The individual axial separating elements may be configured to have the size commensurate with the space available in the gap between two adjacent rolling elements of the two rings of rolling elements between the two bearing races, such that the axial separating elements stay in place. If the axial separating element is configured as a ring common to all the rolling elements of the two rings of rolling elements, its placement is simple, and it may either rotate freely between the adjacent rolling elements, or it may be configured with a surface profile having concave indentations for receiving respective rolling elements.

In an embodiment, either the inner ring or the outer ring comprises or is connected with circumferential separators distributed around the outer circumference of the inner ring or around the inner circumference of the outer ring, wherein the circumferential separators extend in a radial direction into the gaps between two adjacent rolling elements of at least one of the two rings of rolling elements, such that every gap between two adjacent rolling elements is provided with a circumferential separator. The circumferential separators ensure that the rolling elements are displaced only in an axial direction, but not in the circumferential direction of the reduction bearing. Any radial displacement of the rolling elements is prevented by the adjacent surfaces of the inner and outer rings as bearing races.

Such circumferential separators are advantageously provided for both rings of rolling elements, wherein the circumferential separators are separately provided for each of the rings of rolling elements or circumferential separators are provided which are common for both rings of rolling elements. In particular, the above-mentioned axial separating element configured as a ring can be used when there are separately provided circumferential separators for each of the rings, since the axial separating ring element may be provided through the gaps between the separate circumferential separators. Circumferential separators provided as one piece for both rings of rolling elements will be advantageously used together with individual axial separating elements.

In an embodiment, the center ring is configured as an input shaft having a profiled input shaft end face facing the rolling elements of a first ring of rolling elements in an axial direction of the reduction bearing, the profiled input shaft end face having an elevation structure having one or more peaks in the axial direction, causing the rolling elements of the first ring of rolling elements to be displaced in an axial direction during rotation of the center ring relative to the ring of rolling elements. According to one of the previously described configurations, the rolling elements of the two rings of rolling elements may be configured to be displaced in the axial direction in unison. The axial displacement action transmitted from the profiled input shaft end face to the rolling elements of the first ring of rolling elements is in this case further transmitted to the rolling elements of the second ring of rolling elements.

Advantageously, either the inner ring or the outer ring has a profiled output end face having grooves and teeth, facing the rolling elements of the first ring of rolling elements or the rolling elements of the second ring of rolling elements, configured as a structure elevated in an axial direction opposite to the peaks of the profiled input shaft end face, wherein the number of grooves and teeth is higher than the number of the peaks. The ratio of the number of grooves or, respectively, teeth to the number of peaks is indicative of the reduction ratio of the harmonic-wave type reduction bearing.

In an embodiment, the profiled output end face having grooves and teeth is attached to, connected with or of one piece with the inner ring or the outer ring.

If in the second of the two rings of rolling elements the rolling elements are axially stationary, the reduction action is decoupled from the axial bearing action. This feature takes away axial stress from the rolling elements of the first ring which, through their axial displacement, transmit the reduction action, and thereby allows for a greater longevity of the reduction bearing.

A further increase in flexibility is achieved, if in a further embodiment two or more previously described reduction bearings according to the invention are configured in subsequent interconnected reduction stages located in axial alignment with each other, wherein an output of at least one first reduction stage drives an input of at least one second reduction stage. With this matter, a two-stage or multiple-stage reduction bearing having a small diameter is achieved having axial bearing capability.

The object of the invention is also achieved by an electric motor, wherein at least one above-described reduction bearing according to the invention is integrated with or into the electric motor, wherein a casing of the electric motor forms a supporting structure for the reduction bearing and a rotor of the electric motor is drivingly connected to or integral with an input shaft of the reduction bearing.

The electric motor, by way of incorporating or being integrated with an inventive reduction bearing, incorporates the same features, advantages and properties as the inventive reduction bearing.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic cross sectional view of a first embodiment of a reduction bearing,
- Fig. 2: a schematic cross sectional view of a second embodiment of a reduction bearing,
- Fig. 3: a schematic cross sectional view of a third embodiment of a reduction bearing,
- Fig. 4: a schematic cross sectional view of a fourth embodiment of a reduction bearing,
- Fig. 5: a schematic cross sectional view of a fifth embodiment of a reduction bearing,
- Fig. 6: a schematic cross sectional view of a sixth embodiment of a reduction bearing and
- Fig. 7: a schematic view of an electric motor according to the invention.

In the drawings, the same or similar types of elements or respectively corresponding parts are provided with the same reference numbers in order to prevent the item from needing to be reintroduced.

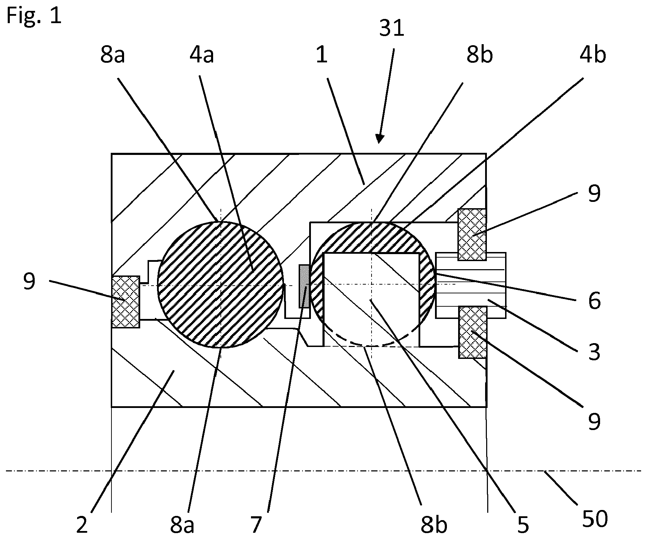

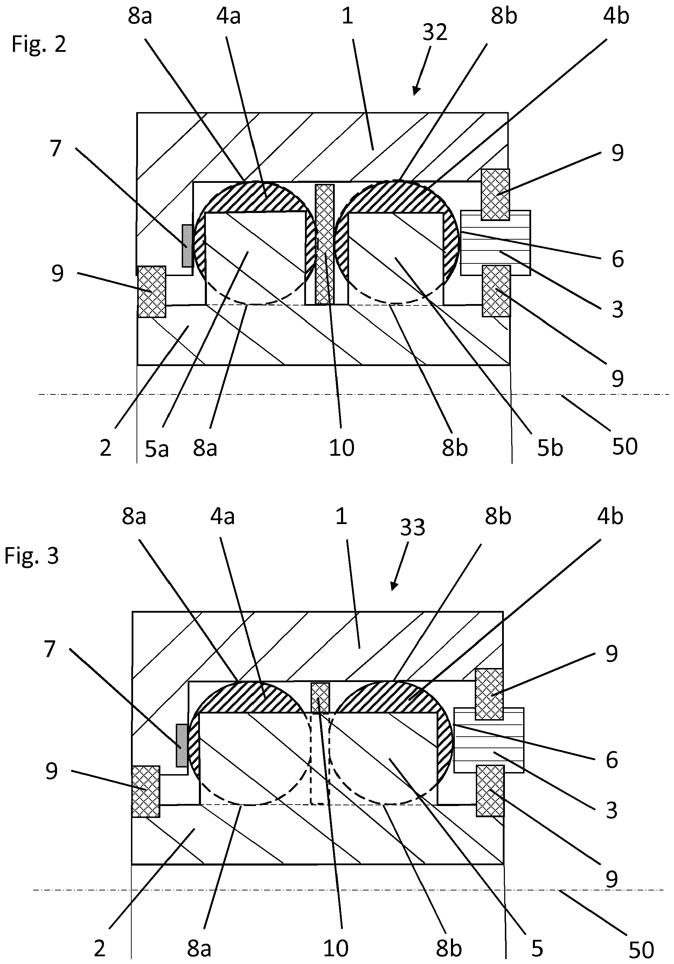

Fig. 1 shows a quick schematic cross-sectional view of a first embodiment of a reduction bearing 31, which has a general ring shape centered around an axis of rotational symmetry 50. For simplicity, Fig. 1 only shows the cross section through one portion of the ring, but not of the opposite part. In Fig. 1, the vertical direction is the radial direction of the reduction bearing 31, the horizontal direction corresponds to the axial direction of the reduction bearing 31. The circumferential direction points perpendicularly into the plane of the figure. The same convention is used in Figs. 2 to 7 as well.

Two rings of rolling elements 4a, 4b are located between an outer ring 1 and an inner ring 2 of the reduction bearing 31, the outer ring 1 having bearing races 8a, 8b for the rolling elements 4a, 4b, and the inner ring 2 likewise having bearing races 8a, 8b for the rolling elements 4a, 4b. The rolling elements 4a of the second ring are rolling in straight races 8a having arcuate race profiles adapted to the diameter of the rolling elements 4a and provide axial and radial bearing functionality by means of the bearing races 8a having contact with the rolling elements 4a in the axial direction and in the radial direction. In the circumferential direction, the rolling elements 4a may be in direct contact with each other, and freely movable.

In contrast, the movement of the rolling elements 4b of the first ring is controlled only in the radial direction by the bearing races 8b of the inner ring 2 and the outer ring 1. In circumferential direction the movement is controlled by circumferential separators 5 located in the gaps between two adjacent rolling elements 4b of the first ring of rolling elements 4b. In the axial direction, the rolling elements 4b our bounded on one side by the profiled input shaft end face 6 of the center ring or input shaft 3 having one or more peaks and on the opposite side by a profiled output end face 7 having a much higher number of grooves and teeth. The profiled output end face 7 is part of or attached to an extension part of the outer ring 1 extending into the gaps between the rolling elements 4a and 4b, wherein the side of the extension part facing rolling element 4a is configured as a part of the bearing race 8a providing resistance against axial movement, and the side facing rolling element 4b carries the profiled output end face 7.

On both sides, the gaps between the outer ring 1, the inner ring 2 and the input shaft 3, respectively, are sealed against the outside by seals 9. In an alternative embodiment, the seal 9 on the left side may be omitted if the reduction bearing 31 is coupled to another structure on the left side providing a connection for example to the outer ring 1 and providing a counterforce to the axial force imparted from the right of Fig. 1. The same can be the case for the subsequent embodiments of Figs. 2 to 7.

The typical use of the reduction bearing 31 is such that the outer ring 1 will be secured against an outer casing, the central ring will serve as an input shaft 3 and the inner ring 2 as output, wherein the rotational speed input to the input shaft 3 is translated into a reduced rotational speed of the inner ring 2, proportional to the ratio of peaks to grooves. However, any other configuration may also be chosen, provided that at least one of the three rings is secured against rotation.

The reduction bearing 32 according to the second embodiment shown in Fig. 2 is different from the first embodiment of Fig. 1 in that both rolling elements 4a, 4b of both rings of rolling elements 4a, 4b take part in the reduction action, since both are axially displaced during rotation of the reduction bearing. In this case, the profiled output end face 7 is located abutting the rolling element 4a on the side opposite to the profiled input shaft end face 6 contacting rolling element 4b. Rolling elements 4a, 4b our separated by an elastic axial separator ring 10, which is continuous around the complete circumference of the reduction bearing 32. The separator ring 10 removes any play, which may otherwise exist between the rolling elements 4a, 4b and takes part in the axial bearing action. Accordingly, both rings of rolling elements 4a, 4b are equipped with circumferential separators 5a, 5b having a gap between them through which the elastic axial separator ring 10 is threaded. The gap between the two circumferential separators 5a, 5b is wide enough to allow for axial displacement of the axial separator ring 10, along with the axial displacement of rolling elements 4a, 4b.

The reduction bearing 33 according to the third embodiment shown in Fig. 3 is different from the second embodiment of Fig. 2 in that in this case, there are common circumferential separators, five for both rings of rolling elements 4a, 4b. Consequently, elastic individual axial separators 11, the dimension of which is chosen such that they have the height of the space between the bearing races 8a, 8b of the inner ring 2 and the outer ring 1, replace the elastic axial separator ring 10.

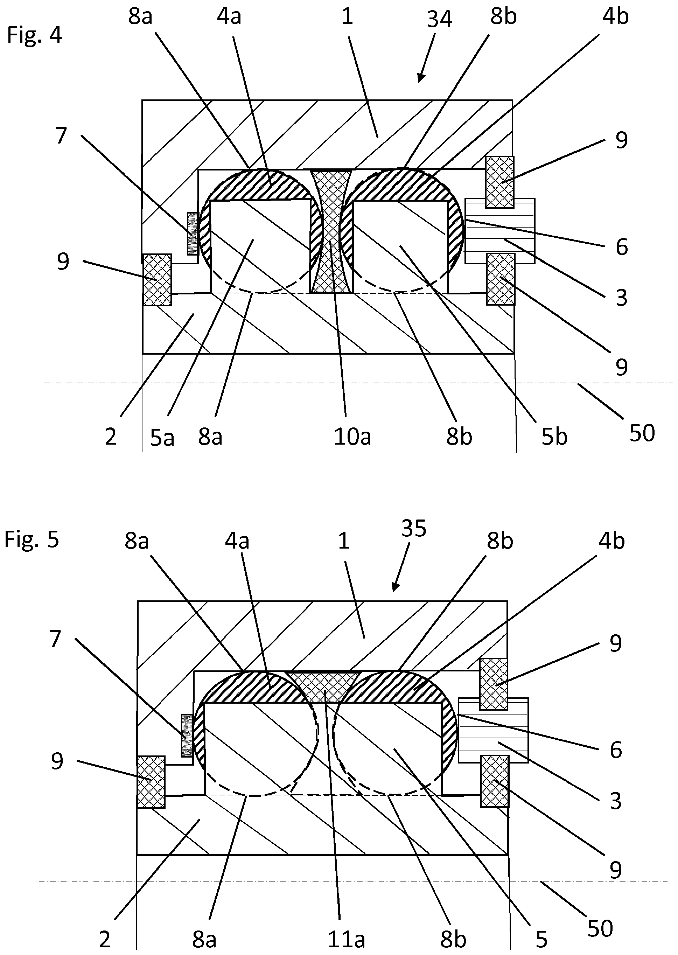

Fig. 4 shows reduction bearing 34 according to a fourth embodiment, which is different from the second embodiment according to Fig. 2, in that the elastic axial separator ring, 10a is not flat, as the elastic separator ring 10 of Fig. 2, but has a biconcave shape locally adapted to accommodate the rolling elements 4a, 4b. The shape may be constant along the whole circumference of the axial separator ring, but may also vary to provide grooves for accommodating individual rolling elements 4a, 4b.

The reduction bearing 35 according to the fifth embodiment of Fig. 5 differs from the third embodiment of Fig. 3 again in that the elastic individual axial separator, 11 a has a biconcave cross section, in analogy to the fourth embodiment shown in Fig. 4.

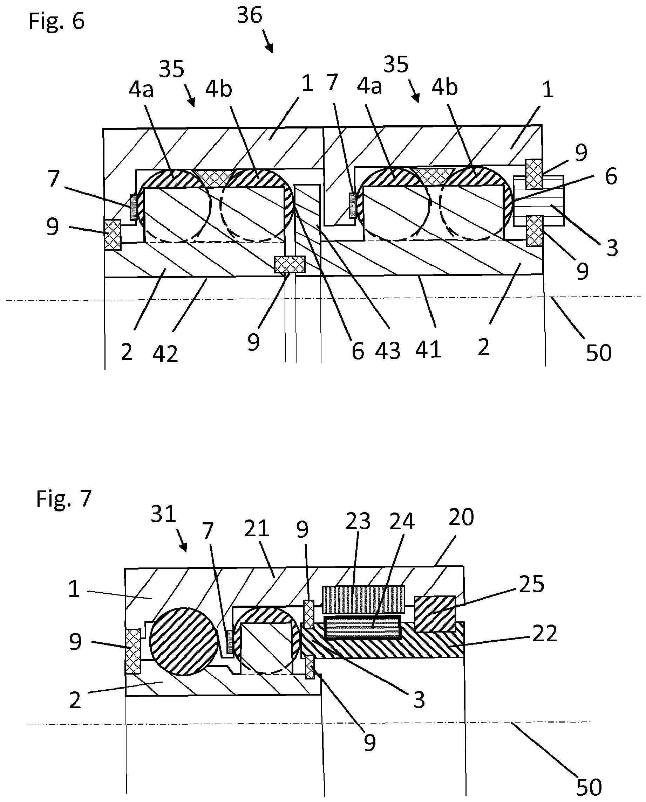

Fig. 6 shows a sixth embodiment of a reduction bearing 36, which in this case is a two-stage reduction bearing having a first reduction stage 41 and second reduction stage 42, each configured as a reduction bearing 35. Each of the two reduction stages 41, 42 may be alternatively chosen as a variant of one of the previous embodiments of the reduction bearing 31, 32, 33, or 34, with two rings of rolling elements 4a, 4b each. The two reduction stages 41, 42 each have an outer ring 1, an inner ring 2 and an input shaft 3. A connecting link 43 is provided between the inner ring 2 of the first reduction stage 41 and the input shaft 3 of the second reduction stage 42. The connecting link 43 is connected to the inner ring 2 of the first reduction stage 41 and abuts against rolling elements 4b of the second stage 42. The connecting link 43 is provided with a profiled input shaft end face 6. By this means, the rotation of the inner ring 2 of the first reduction stage 41 is transmitted to the input shaft 3 of the second reduction stage 42. Both reduction stages 41, 42 are configured as reduction bearings 35 having axial bearing functionality. A further seal 9 is provided between the connecting link 43 and the inner ring 2 of the second stage 42.

In Fig. 7, an electric motor 20 according to the invention is shown schematically, wherein the electric motor 20 is connected to a reduction bearing 31 incorporated into the casing 21 of the electric motor 20. Instead of a reduction bearing 31, a variant such as reduction bearings 32, 33, 34 or 35 may also be used. The reduction bearing 31 is centered around the axis of rotational symmetry 50, which is also the central axis of rotational symmetry for the electric motor 20. The outer ring 1 of the reduction bearing 31 is connected with the casing 21 of the electric motor 20 and thus kept stationary with respect to the electric motor 20. A rotation action is transmitted from the rotor 22 of the electric motor 20 to the input shaft 3 of the reduction bearing 31, and the reduced speed rotational movement of the inner ring 2 is used as output, depicted by arrows pointing to the output side on the left. Dashed lines indicate the ring shape of the reduction bearing 31. Further components in the electric motor 20 are the stator 23, rotor coil 24 and motor bearing 25.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 1: outer ring
- 2: inner ring
- 3: input shaft
- 4a: rolling element of first ring of rolling elements
- 4b: rolling element of second ring of rolling elements
- 5: circumferential separator
- 5a: circumferential separator of first ring
- 5b: circumferential separator of second ring
- 6: profiled input shaft end face
- 7: profiled output end face
- 8a: race of first ring of rolling elements
- 8b: race of second ring of rolling elements
- 9: seal
- 10, 10a: elastic axial separator ring
- 11, 11 a: elastic individual axial separator
- 20: electric motor
- 21: casing
- 22: rotor
- 23: stator
- 24: rotor coil
- 25: motor bearing
- 31 - 36: reduction bearing
- 41: first stage
- 42: second stage
- 43: connecting link
- 50: axis of rotational symmetry

## Claims

1. Reduction bearing (31 - 36) in a ring-shaped configuration having a central axis of rotational symmetry (50) and having three rings (1, 2, 3) including an inner ring (3), a center ring (2) and an outer ring (1), the three rings (1, 2, 3) being concentric around the axis of rotational symmetry (50), a first ring of rolling elements (4a) and a second ring of rolling elements (4b), the two rings of rolling elements (4a, 4b) being centered around the axis of rotational symmetry (50), in particular in axial alignment with each other, and located between the inner ring (3) and the outer ring (1), wherein the inner ring (3) and the outer ring (1) are configured as having bearing races (8a, 8b) for both of the two rings of rolling elements (4a, 4b) in a radial direction, wherein the reduction bearing (31 - 36) is configured to transmit a wave-type reduction action between the center ring (2) and either the inner ring (3) or the outer ring (1) via axial displacement of the rolling elements (4a, 4b) of at least one of the two rings of rolling elements (4a, 4b).

2. Reduction bearing (31 - 36) according to claim 1, **characterized in that** the two rings of rolling elements (4a, 4b) are in axial alignment with each other.

3. Reduction bearing (31 - 36) according to claim 2, **characterized in that** both rings of rolling elements (4a, 4b) have the same number of rolling elements (4a, 4b), and the rolling elements (4a, 4b) of both rings are in axial alignment with each other.

4. Reduction bearing (31 - 36) according to claim 3, **characterized in that** the axially aligned rolling elements (4a, 4b) of the two rings of rolling elements (4a, 4b) are in direct contact with each other, or separated by an elastic, in particular low-friction, axial separating element (10, 10a, 11, 11 a) of flat or biconcave cross section, and that the rolling elements (4a, 4b) of both rings of rolling elements (4a, 4b) are subject to axial displacement.

5. Reduction bearing (31 - 36) according to claim 4, **characterized in that** the axial separating element is a ring (10, 10a) common to all the rolling elements (4a, 4b) of the two rings of rolling elements (4a, 4b), or every pair of axially aligned rolling elements (4a, 4b) is provided with its own axial separating element (11, 11 a).

6. Reduction bearing (31 - 36) according to one of claims 1 to 5, **characterized in that** either the inner ring (1) or the outer ring (3) comprises or is connected with circumferential separators (5, 5a, 5b) distributed around the outer circumference of the inner ring (1) or around the inner circumference of the outer ring (3), wherein the circumferential separators (5, 5a, 5b) extend in a radial direction into the gaps between two adjacent rolling elements (4a, 4b) of at least one of the two rings of rolling elements (4a, 4b), such that every gap between two adjacent rolling elements (4a, 4b) is provided with a circumferential separator (5, 5a, 5b).

7. Reduction bearing (31 - 36) according to claim 6, **characterized in that** circumferential separators (5, 5a, 5b) are provided for both rings of rolling elements (4a, 4b), wherein the circumferential separators (5a, 5b) are separately provided for each of the rings of rolling elements (4a, 4b) or circumferential separators (5) are provided which are common for both rings of rolling elements (4a, 4b).

8. Reduction bearing (31 - 36) according to one of claims 1 to 7, **characterized in that** the center ring (2) is configured as an input shaft having a profiled input shaft end face (6) facing the rolling elements (4b) of a first ring of rolling elements (4b) in an axial direction of the reduction bearing (31 - 36), the profiled input shaft end face (6) having an elevation structure having one or more peaks in the axial direction, causing the rolling elements (4b) of the first ring of rolling elements (4b) to be displaced in an axial direction during rotation of the center ring (2) relative to the ring of rolling elements (4b).

9. Reduction bearing (31 - 36) according to claim 8, **characterized in that** either the inner ring (1) or the outer ring (3) has a profiled output end face (7) having grooves and teeth, facing the rolling elements (4b) of the first ring of rolling elements (4b) or the rolling elements (4a) of the second ring of rolling elements (4a), configured as a structure elevated in an axial direction opposite to the peaks of the profiled input shaft end face (6), wherein the number of grooves and teeth is higher than the number of the peaks.

10. Reduction bearing (31 - 36) according to claim 9, **characterized in that** the profiled output end face (7) having grooves and teeth is attached to, connected with or of one piece with the inner ring (1) or the outer ring (3).

11. Reduction bearing (31 - 36) according to one of claims 1 to 10, **characterized in that** in the second of the two rings of rolling elements (4a) the rolling elements (4a) are axially stationary.

12. Reduction bearing (36), **characterized in that** two or more reduction bearings (31 - 35) according to one of claims 1 to 11 are configured in subsequent interconnected reduction stages (41, 42) located in axial alignment with each other, wherein an output of at least one first reduction stage (41) drives an input of at least one second reduction stage (42).

13. Electric motor (20), **characterized in that** at least one reduction bearing (31 - 36) according to one of claims 1 to 12 is integrated with or into the electric motor (20), wherein a casing (21) of the electric motor (20) forms a supporting structure for the reduction bearing (31 - 36) and a rotor of the electric motor (20) is drivingly connected to or integral with an input shaft (2) of the reduction bearing (31 - 36).
